# EUROPÄISCHE PATENTSCHRIFT

(11) **EP 1 169 854 B1**
(45) Veröffentlichungstag und Bekanntmachung des Hinweises auf die Patenterteilung: **28.08.2002**
(21) Anmeldenummer: 00929273.1
(22) Anmeldetag: 03.04.2000
(51) Int. Cl.: H04N 5/45

(54) **VERFAHREN UND SCHALTUNGSANORDNUNG ZUR BILD-IN-BILD EINBLENDUNG**
METHOD AND CIRCUIT ARRANGEMENT FOR PICTURE-IN-PICTURE FADE-IN
PROCEDE ET CIRCUIT POUR REALISER UNE SURIMPRESSION IMAGE SUR IMAGE

(30) Priorität: 13.04.1999 DE 19916633
(43) Veröffentlichungstag der Anmeldung: 09.01.2002
(73) Patentinhaber: Infineon Technologies AG, 80539 München (DE)
(72) Erfinder: BRETT, Maik, D-65719 Hofheim am Taunus (DE); HAHN, Marko, D-81373 München (DE)
(74) Vertreter: Banzer, Hans-Jörg, Dipl.-Ing.
(86) Internationale Anmeldenummer: DE0001002
(87) Internationale Veröffentlichungsnummer: WO00062534

(56) Entgegenhaltungen:
- EP-A- 0 411 548
- GB-A- 2 215 954
- US-A- 5 369 442

## Beschreibung

Die Erfindung betrifft ein Verfahren zur Bild-in-Bild-Einblendung, bei dem eine Folge von Einfügebildern in einen Speicher eingeschrieben und zum Einblenden in eine Folge von Hauptbildern aus diesem ausgelesen wird, und zwar gemäß dem Oberbegriff von Anspruch 1, sowie eine Schaltungsanordnung zur Bild-in-Bild-Einblendung, insbesondere zur Durchführung dieses Verfahrens gemäß dem Oberbegriff von Anspruch 3.

Es sind verschiedene Verfahren und Vorrichtungen zur Einblendung eines oder mehrerer Einfügebilder in ein Hauptbild (PIP - Picture In Picture) bekannt. Die in dem Speicher gespeicherten Einfügebilder werden dabei synchron mit einem Hauptbild ausgelesen. Da die Auslesegeschwindigkeit in allgemeinen entsprechend der Dezimation des Einfügebildes höher ist, als die Einschreibgeschwindigkeit, kann aufgrund des Überholens des Schreibzeigers durch den Lesezeiger in dem Einfügebild eine Naht auftreten. Das Einfügebild setzt sich in diesem Fall aus einem aktuellen und einem vorhergehenden Teil zusammen, zwischen denen die Naht verläuft.

Insbesondere in dem Fall, in dem die beiden Teile aus unterschiedlichen Bewegungsphasen stammen, ergibt sich ein störende Effekt, da bewegte Objekte, durch die die Naht verläuft, verzerrt dargestellt werden. Wenn außerdem die Frequenzen der Einfüge- und Hauptbilder nicht genau übereinstimmen, wandert die Naht, was als besonders unangenehm empfunden wird.

Problematisch kann insbesondere der Fall sein, daß das Hauptund das Einfügebild in unterschiedlichen Normen vorliegen. Wenn zum Beispiel das Hauptbild mit einer Bildwiederholfrequenz von 60 Hz und das Einfügebild mit einer solchen von 50 Hz wiedergegeben werden soll, entsteht durch die unterschiedlichen Rasterlagen ein periodisches Springen des Bildes mit der Differenzfrequenz. Für diesen Fall besteht bei den bekannten integrierten Bild-in-Bild-Schaltungen die Möglichkeit, in einen sogenannten Fallback-Modus zu wechseln, mit dem diese Störungen vermieden werden sollen. Dieser Modus wird auch als Fieldmodus oder Halbbild-Modus bezeichnet, da nur eines der beiden Halbbilder in den Speicher geschrieben wird. Dieses Halbbild gelangt dann jeweils zweimal zur Anzeige, so daß in der Darstellung eine Zeilenverdoppelung auftritt. Welches der beiden Halbbilder benutzt wird, ist unerheblich.

Weiterhin ist mit diesem Modus auch eine Darstellung mit einer Bildwiederholfrequenz von 100 Hz bei minimalem Speicheraufwand möglich, ohne daß durchlaufende Nahteffekte auftreten. Nachteilig hierbei ist jedoch, daß im Fieldmodus ein Sprung zwischen den gleichen Rastern unterschiedlicher Vollbilder auftreten kann, durch den eine Naht erzeugt wird, die allerdings nur bei bewegten Bildern sichtbar wird. Ein weiterer Nachteil dieser Betriebsart besteht in der verringerten vertikalen Bildauflösung.

Um in dem bevorzugten Frame-Modus (Vollbildmodus) den relativen hohen Speicherbedarf zu senken, wird insbesondere bei größeren Bildern in vielen Fällen eine leichte Kompression mit einem Faktor von zwischen 0,5 und 0,8 vorgenommen. Ein mögliches Kompressionsverfahren stellt die DPCM (Differenz-Pulscode-Modulation) dar. Bei diesem Verfahren wird die Differenz zwischen aufeinanderfolgenden Pixeln einer Zeile gebildet. Diese Differenz kann mit einer geringeren Auflösung gespeichert werden, wobei ein nichtlineares Quantisierungsschema zugrunde gelegt wird.

Hierbei tritt aber das Problem auf, daß der Lesezeiger den Schreibzeiger während einer Zeile überholen kann. Bei einer Bildspeicherung ohne Kompression werden in diesem Fall Pixel wiedergegeben, die zeitlich zu einem vorhergehenden Bild gehören. Im Falle einer Kompression wird jedoch der Inhalt einer solchen Zeile verstümmelt, da nach der Speicherung die Dekompression nur dann fehlerfrei realisierbar ist, wenn der gesamte Zeileninhalt konsistent ist. Dies hat zur Folge, daß bei Anwendung einer Kompression eine fehlerfreie Darstellung beider Halbbilder nur dann möglich ist, werden keine Naht auftreten kann. Bei Bildsignalen mit unterschiedlichen Normen oder unterschiedlichen Bildfrequenzen kann somit bei Anwendung der bekannten Wiedergabeverfahren eine Kompression nicht realisiert werden.

US-A-5 369 442 beschreibt ein Verfahren und eine Schaltungsanordnung zur Bild-in-Bild Einblendung, bei denen aufeinanderfolgende Bilder des Einfügebildes alternierend in zwei verschiedene Speicherregionen eines Speichers geschrieben werden. Beim Auslesen eines Bildes aus dem Speicher wird die Speicherregion gewählt, bei der ein Überholen des Schreibvorgangs durch den Lesevorgang nicht auftritt.

Der Erfindung liegt deshalb die Aufgabe zugrunde, ein Verfahren und eine Schaltungsanordnung der eingangs genannten Art zu schaffen, mit dem/der auch im Framemodus (Vollbild-Modus) die Bilddaten zur Einsparung von Speicherplatz komprimiert abgespeichert werden können, ohne daß die Gefahr von Bildstörungen durch unterschiedliche Schreib- und Lesegeschwindig keiten besteht.

Gelöst wird diese Aufgabe mit einem eingangs genannten Verfahren, das sich gemäß Anspruch 1 dadurch auszeichnet, daß
- ein Einfügebild unter Adressen in den Speicher eingeschrieben wird, die jeweils um eine Anzahl von N Zeilen gegenüber einem zuvor eingeschriebenen Einfügebild vorangehen,
- zu Beginn jeder zu lesenden Zeile anhand der momentanen Schreibadresse sowie der Geschwindigkeitsdifferenz zwischen den Schreib- und Lesevorgängen ermittelt wird, ob in der Zeile ein Überholen des Schreibvorgangs durch den Lesevorgang auftreten kann und
- in dem Fall, in dem ein solches Überholen auftreten kann, die Leseadresse um N Zeilen auf eine gleiche Zeile eines zuvor eingeschriebenen Einfügebildes verschoben wird,
- wobei die Anzahl N in Abhängigkeit von einer Geschwindigkeitsdifferenz zwischen dem Lese- und dem Schreibzeiger mindestens so groß gewählt wird, daß ein zweites Überholen in einem Halbbild nicht auftreten kann.

Die Aufgabe wird ferner mit einer Schaltungsanordnung nach Anspruch 3 gelöst, die insbesondere zur Durchführung dieses Verfahrens vorgesehen ist.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung einer bevorzugten Ausführungsform anhand der Zeichnung. Es zeigt:
- Fig. 1: eine Zeigerdarstellung für das Lesen und Schreiben von Bilddaten in den bzw. aus dem Bildspeicher gemäß dem Stand der Technik;
- Fig. 2: eine Zeigerdarstellung bei einem erfindungsgemäßen Verfahren und
- Fig. 3: eine erfindungsgemäße Schaltungsanordnung.

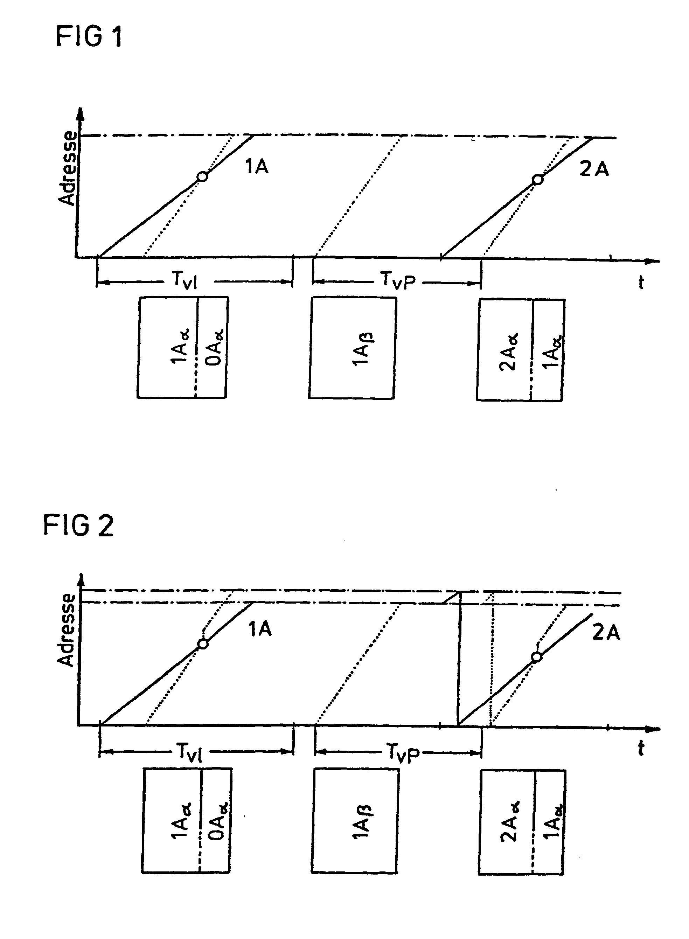

In den Diagrammen der Figuren 1 und 2 sind mit gepunkteten Linien die Lesezeiger und mit durchgezogenen Linien die Schreibzeiger angedeutet. Diese Zeiger repräsentieren jeweils den Momentanwert eines Adreßzählers zum Lesen bzw. Schreiben eines Bildpunktes aus dem bzw. in den Bildspeicher. Die Steigung der Zeiger repräsentiert die Geschwindigkeit, mit der innerhalb eines bestimmten Zeitraums eine Anzahl von Speicherzellen überstrichen wird. Wie in den Figuren zu erkennen ist, kann somit der Lesezeiger den Schreibzeiger überholen.

Unter den Zeitachsen sind jeweils die aktuellen Halbbilder angegeben, wobei mit den Großbuchstaben jeweils ein Raster eines Einfüge-Halbbildes und mit den griechischen Kleinbuchstaben das eines Hauptbildes bezeichnet ist. Die Ziffern verdeutlichen die zeitliche Abfolge dieser Bilder.

Gemäß Figur 1 wird das ausgewählte Halbbildraster (im dargestellten Fall das A-Raster) eines Kleinbildes in den Bildspeicher geschrieben. Dies bedeutet, daß für die Dauer eines Halbbildes abwechselnd geschrieben und gewartet wird. Dies entspricht einer Unterabtastung sowohl in temporaler, als auch in vertikaler Richtung um den Faktor 2. Die Halbbilder werden beginnend mit einer bestimmte Speicheradresse fortlaufend eingeschrieben, so daß das nächste Halbbild gleicher Rasterlage das vorangegangene Halbbild überschreibt, wobei gleiche Zeilen und gleiche Pixel jeweils unter der gleichen Adresse im Speicher liegen. Wenn gleichzeitig die Halbbilddaten aus dem Speicher ausgelesen werden, kann der Schreibzeiger durch den Lesezeiger überholt werden. An der Überholstelle tritt dann ein Sprung zwischen den Bildern auf. Die Wiederholung des Halbbildes an sich verläuft dagegen störungsfrei.

Erfindungsgemäß werden die Halbbilder so abgespeichert, daß jedes folgende Halbbild gleicher Rasterlage an eine um genau N Zeilen vorangehende Adresse gegenüber dem vorhergehenden Halbbild in den Speicher eingeschrieben wird.

Wie in Figur 2 zu erkennen ist, hat dies zur Folge, daß das vorangehende Halbbild erst N Zeilen später überschrieben wird. Diese N Zeilen müssen zusätzlich im Speicher gespeichert werden können, so daß die Speicherkapazität entsprechend auszulegen ist.

Weiterhin wird der Lese- und der Schreibzeiger zu Beginn jeder zu lesenden Zeile geprüft und ermittelt, ob der Lesezeiger den Schreibzeiger während dieser Zeile überholen könnte. Zur Absicherung dieser Prognose wird auf den Lesezeiger eine bestimmte Mindestdistanz aufaddiert. Wenn der Lesezeiger mit dieser Distanz größer ist, als der Schreibzeiger, so ist davon auszugehen, daß ein Überholen auftreten würde. In diesem Fall wird der Lesezeiger sofort um die genannten N Zeilen verschoben, so daß er nun auf die gleiche Zeile eines älteren Bildes weist. Dadurch wird ein Überholen vermieden, so daß eine fehlerfreie Dekompression und somit eine störungsfreie Wiedergabe möglich ist.

Die Anzahl N von zusätzlich im Speicher zu haltenden Zeilen muß so bestimmt werden, daß ein zweites Überholen im gleichen Halbbild nicht auftreten kann. Diese Zahl N ist eindeutig durch die maximal zu erwartende Geschwindigkeitsdifferenz aufgrund der unterschiedlichen Bildwiederholfrequenzen einschließlich deren Toleranzen, sowie die minimale vertikale Dezimation bestimmt und liegt bei einem Bild-in-Bild Prozessor in der Größenordnung von etwa 1 bis 24 Zeilen.

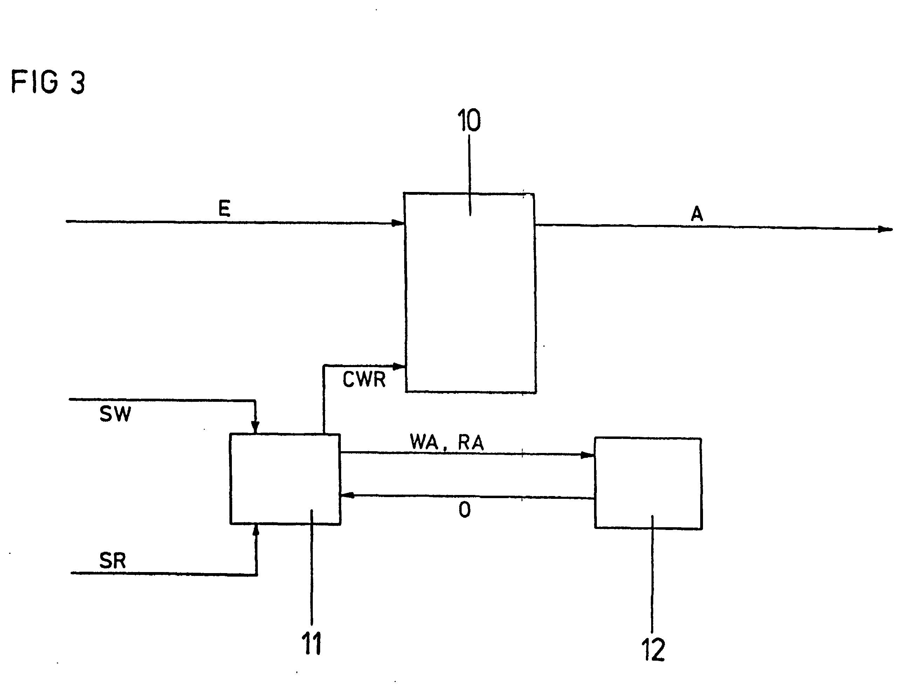

Figur 3 zeigt schließlich eine Schaltungsanordnung zur Durchführung des Verfahrens. Die Schaltungsanordnung umfaßt im wesentlichen einen Bildspeicher 10, eine Einheit 11 zur Schreib- und Lesesteuerung, sowie eine Einheit 12 zur Offset-Erzeugung.

Über einen Eingangsanschluß E werden dem Bildspeicher 10 Bilddaten zugeführt. Die aus dem Bildspeicher 10 ausgelesenen Bilddaten werden über einen Ausgangsanschluß A zu einer weiteren Bildverarbeitung und Bilddarstellung übertragen. Der Einheit 11 zur Schreib- und Lesesteuerung wird ein erstes Startsignal SW zum Einschreiben eines Bildes in den Speicher 10 sowie ein zweites Startsignal SR zum Auslesen eines Bildes aus dem Speicher 10 zugeführt. Die Einheit 11 erzeugt in Abhängigkeit von diesen Startsignalen die entsprechenden Schreib- und Leseadressen, die der Einheit 12 zugeführt werden. Die Einheit 11 erzeugt die Lese/Schreibadresse während des Lesens/Schreibens in einer fortlaufenden Weise, so dass eine eindeutige Zuordnung zwischen Speicheradresse und Zeile möglich ist. Die Leseadresse wird dabei mit dem Lesestartsignal auf den Wert der letzten Schreibadresse zu Beginn des Schreibens zurückgesetzt, worauf die normale fortlaufende Adressierung mit diesem Startwert neu beginnt. Die Schreibadresse wird mit dem Schreibstartsignal auf einen Wert N Zeilen vor dem Wert zu Beginn des letzten Schreiben zurückgesetzt, so dass jedes neue Bild N Zeilen vor dem alten eingeschrieben wird. Mit diesem Wert beginnt dann wieder die normale fortlaufende Adressierung beim Schreiben, die in ihrer Funktion der Adressierung beim Lesen entspricht. Das Lesen /Schreiben wird durch die Startsignale aktiviert. die Startsignale für das einzublendende und das zu speichernde Bild werden von der jeweiligen Synchornisationseinrichtung generiert. Das Startsignal zum Schreiben wird von einer Synchronisationseinrichtung, die Synchronsignale von dem Einfügebild ableitet generiert. Das Startsignal zum Lesen wird von einer Synchronisationseinrichtung, die mit dem Hauptbild synchronisiert ist, generiert. Die Aktivität des Startsignals und weiterer Signale der Synchronisationseinrichtungen können das Lesen/Schreiben beeinflussen, so dass Unterbrechungen im Schreib/Leseablauf möglich sind, zum Beispiel um mittels einer Unterabtastung nur jedes n. Pixel oder jede m. Zeile zu schreiben oder aber um den Leseprozess nach dem Lesen einer Zeile des Einfügebildes für die Dauer einer Halbbildzeile bis die Einfügeposition einer tieferen Zeile erreicht ist, zu unterbrechen. Ein weiteres Signal wird der Vorrichtung (11) zugeführt, womit Änderungen im Adressablauf möglich sind, zum Beispiel um eine Zeile wiederholt zu lesen. Die Vorrichtung (12) überwacht die Schreib- und Leseadressen derart, dass, wenn ein mögliches Überholen der Schreib/Lesezeiger durch die bereits erläuterten Mechanismen detektiert wird, ein Sprung des Lesezeigers zu Beginn der Zeile des Lesens um N Zeilen in positiver Richtung ausgeführt wird. Dazu wird das Offsetsignal O generiert und die Vorrichtung (11) ausgewertet.

## Patentansprüche

1. Verfahren zur Bild-in-Bild Einblendung, bei dem eine Folge von Einfügebildern in einen Speicher eingeschrieben und zum Einblenden in eine Folge von Hauptbildern aus diesem ausgelesen wird,
**dadurch gekennzeichnet, dass**
- ein Einfügebild unter Adressen in den Speicher eingeschrieben wird, die jeweils um eine Anzahl von N Zeilen gegenüber einem zuvor eingeschriebenen Einfügebild vorangehen,
- zu Beginn jeder zu lesenden Zeile anhand der momentanen Schreibadresse sowie der Geschwindigkeitsdifferenz zwischen den Schreib- und Lesevorgängen ermittelt wird, ob in der Zeile ein Überholen des Schreibvorgangs durch den Lesevorgang auftreten kann und
- in dem Fall, in dem ein solches Überholen auftreten kann, die Leseadresse um N Zeilen auf eine gleiche Zeile eines zuvor eingeschriebenen Einfügebildes verschoben wird,
- wobei die Anzahl N in Abhängigkeit von einer Geschwindigkeitsdifferenz zwischen dem Lese- und dem Schreibzeiger mindestens so groß gewählt wird, daß ein zweites Überholen in einem Halbbild nicht auftreten kann.

2. Verfahren nach Anspruch 1,
**dadurch gekennzeichnet, dass** zur Ermittlung eines Überholens auf die Leseadresse eine zusätzliche Distanz zu der Schreibadresse aufaddiert wird.

3. Schaltungsanordnung zur Bild-in-Bild Einblendung mit einem Bildspeicher und einer Einheit zur Schreib- und Lesesteuerung,
**dadurch gekennzeichnet, dass** eine Einheit (12) zur Erzeugung eines Adressenoffset vorgesehen ist, die die Einheit (11) zur Schreib- und Lesesteuerung in der Weise beaufschlagt, daß ein Einfügebild unter Adressen in den Speicher eingeschrieben wird, die jeweils um eine Anzahl von N Zeilen gegenüber einem zuvor eingeschriebenen Einfügebild vorangehen,
- wobei eine Leseadresse mit der Einheit (11) zur Schreibund Lesesteuerung um N Zeilen auf eine gleiche Zeile eines zuvor eingeschriebenen Einfügebildes verschiebbar ist, wenn in einer Zeile ein Überholen eines Schreibvorgangs durch einen Lesevorgang auftreten kann und
- wobei die Anzahl N in Abhängigkeit von einer Geschwindigkeitsdifferenz zwischen dem Lese- und dem Schreibvorgang mindestens so groß gewählt wird, daß ein zweites Überholen in einem Halbbild nicht auftreten kann.

## Claims

1. A method for picture-in-picture insertion, in which a sequence of inset pictures is written to a memory and is read from said memory for insertion into a sequence of main pictures,
**characterized in that**
- an inset picture is written to the memory under addresses which in each case precede a previously written-in inset picture by a number of N lines,
- at the beginning of each line to be read, the instantaneous write address and also the speed difference between the write and read operations are used to determine whether, in the line, the write operation can be overtaken by the read operation, and
- in the case where such overtaking can occur, the read address is shifted by N lines to an identical line of a previously written-in inset picture,
- where the number N is chosen, in a manner dependent on a speed difference between the read pointer and the write pointer, to be at least large enough that a second overtaking cannot occur in a field.

2. The method as claimed in claim 1,
**characterized in that**, in order to determine overtaking, an additional distance to the write address is added to the read address.

3. A circuit arrangement for picture-in-picture insertion having a picture memory and a unit for write and read control,
**characterized in that** a unit (12) for generating an address offset is provided, which acts on the unit (11) for write and read control in such a way that an inset picture is written to the memory under addresses which in each case precede a previously written-in inset picture by a number of N lines,
- in which case a read address can be shifted, by the unit (11) for write and read control, by N lines to an identical line of a previously written-in inset picture if, in a line, a write operation can be overtaken by a read operation, and
- in which case the number N is chosen, in a manner dependent on a speed difference between the read operation and the write operation, at least to be large enough that a second overtaking cannot occur in a field.

## Revendications

1. Procédé d'incrustation image sur image dans lequel on enregistre dans une mémoire une suite d'images à insérer, et on la lit dans la mémoire pour l'incruster dans une suite d'images principales, **caractérisé en ce que**
- une image à insérer est enregistrée dans la mémoire sous des adresses qui précèdent à chaque fois d'un nombre de N lignes une image à insérer enregistrée précédemment,
- au début de chaque ligne à lire, on détermine à l'aide de l'adresse d'écriture momentanée et de la différence de vitesse entre les opérations d'écriture et de lecture s'il est possible que dans la ligne, l'opération d'écriture soit dépassée par l'opération de lecture, et
- dans le cas où un tel dépassement peut se produire, on déplace l'adresse de lecture de N lignes sur une même ligne d'une image à insérer enregistrée préalablement,
- le nombre N étant choisi au moins assez grand, en fonction d'une différence de vitesse entre le pointeur de lecture et le pointeur d'écriture, pour qu'un second dépassement ne puisse pas se produire dans une trame.

2. Procédé selon la revendication 1, **caractérisé en ce que** pour déterminer un dépassement, on ajoute à l'adresse de lecture une distance supplémentaire par rapport à l'adresse d'écriture.

3. Circuit pour l'incrustation image sur image comprenant une mémoire d'images et une unité de commande d'écriture et de lecture, **caractérisé en ce qu'**il est prévu une unité (12) pour générer un décalage d'adresse qui agit sur l'unité (11) de commande d'écriture et de lecture de telle sorte qu'une image à insérer est enregistrée dans la mémoire sous des adresses qui précèdent d'un nombre de N lignes une image à insérer enregistrée précédemment,
- une adresse de lecture pouvant, avec l'unité (11) de commande d'écriture et de lecture, être déplacée de N lignes sur une même ligne d'une image à insérer enregistrée précédemment lorsqu'un dépassement d'une opération d'écriture par une opération de lecture peut se produire dans une ligne, et
- le nombre N étant choisi au moins assez grand, en fonction d'une différence de vitesse entre l'opération de lecture et l'opération d'écriture, pour qu'un second dépassement ne puisse pas se produire dans une trame.
